# EUROPEAN PATENT SPECIFICATION

(11) **EP 0 382 893 B1**
(45) Date of publication and mention of the grant of the patent: **15.12.1993**
(21) Application number: 89118580.3
(22) Date of filing: 06.10.1989
(51) Int. Cl.: F23D 14/72, F23M 11/00, F23Q 9/00, F24H 9/20

(54) **A free-flame atmospheric detector**
Detektor für Brenner
Détecteur pour brûleur

(30) Priority: 13.02.1989 IT 4151989
(43) Date of publication of application: 22.08.1990
(73) Proprietor: OP S.r.l., 35020 Pernumia (PD) (IT)
(72) Inventor: De'Stefani, Pierluigi, I-35100 Padova (IT); Grando, Maurizio, I-30030 Chirignago Venezia (IT); Bortoliero, Michele, I-35043 Monselice Padova (IT)
(74) Representative: Perani, Aurelio

(56) References cited:
- CH-A- 390 844
- CH-A- 423 675
- DE-A- 2 000 198
- DE-A- 3 008 399
- US-A- 3 521 982

## Description

This invention relates to a free-flame atmospheric detector comprising a blowpipe in which an air-gas intake and mixing chamber is defined, a gas supply nozzle and at least one primary air supply hole both opening into said intake chamber, a free flame burner, a mixing conduit extending between said mixing chamber and said burner to supply an air-gas mixture formed in said chamber to said burner, and a flame sensor so positioned as to be swept by the flame issuing from the burner to thereby pilot the gas supply to said nozzle, said burner comprising at least two flame spouts diverging from each other, of which one is directed toward said flame sensor.

For pilot lighting such gas burners as are employed, for instance, in gas-fired space heaters, boilers, and water heaters, either of two devices is typically utilized.

A first type of such devices comprises so-called pilot burners, also abbreviately referred to as "pilots". The second device type comprises free-flame atmospheric detectors.

Although basically similar in outward appearance, pilots and detectors differ radically from each other as relates to the design parameters that determine their primary combustion air to fuel gas mixing ratios. Pilots use suitable air/gas mixing ratios to develop a highly stable flame at the burner, whereas detectors use air/gas mixing ratios yielding a far less stable flame.

This is due to pilots being used, additionally to their function of igniting the boiler main burner -- which feature they share in common with detectors -- to cut off the gas supply to the main burner on either of two occurrences only, namely when the pilot goes off and when the gas supply pressure drops below a safe threshold level.

By contrast, detectors are also used, in addition to the above-noted functions, to cut off the gas supply when the oxygen content of the ambient air drops below a safe threshold value or when the carbon dioxide content rises.

Accordingly, detectors afford for the user safety functions which are definitely superior to those afforded by pilots.

This different response from detectors is due to that, whereas with pilots the amount of the primary combustion air permits of a stable flame even at a relatively low oxygen content, with detectors, as the oxygen level drops below a preset value, the flame moves away from the burner, thereby the thermocouple type flame sensor which controls the gas supply to the main burner is caused to cool down and, therefore, deactivate the boiler.

On the other hand, presently known detectors are little responsive to a drop in the fuel gas supply pressure, as measured by an evaluation method known in the pertinent art as "Turn down Test" (Reduced pressure operation test).

A pilot burner according to the prior art is disclosed in US-A-3521982; this burner has, at its upper part, a flame divider with two inverted channel-shaped portions, one of which is directed toward the flame sensor. Said portions are open at their lower side thereby permitting the air-gas mixture to further mix with secondary combustion air.

The problem underlying this invention is to provide a free-flame atmospheric detector having such construction and performance characteristics as to combine in one all the advantages of atmospheric detectors and pilot burners.

This problem is solved according to the invention by a detector as indicated being characterized in that said flame spouts are sealed against secondary combustion air along their whole length.

The features and advantages of this invention will become more clearly apparent from the following detailed description of a preferred embodiment thereof, given by way of illustration and not of limitation with reference to the accompanying drawings, where:

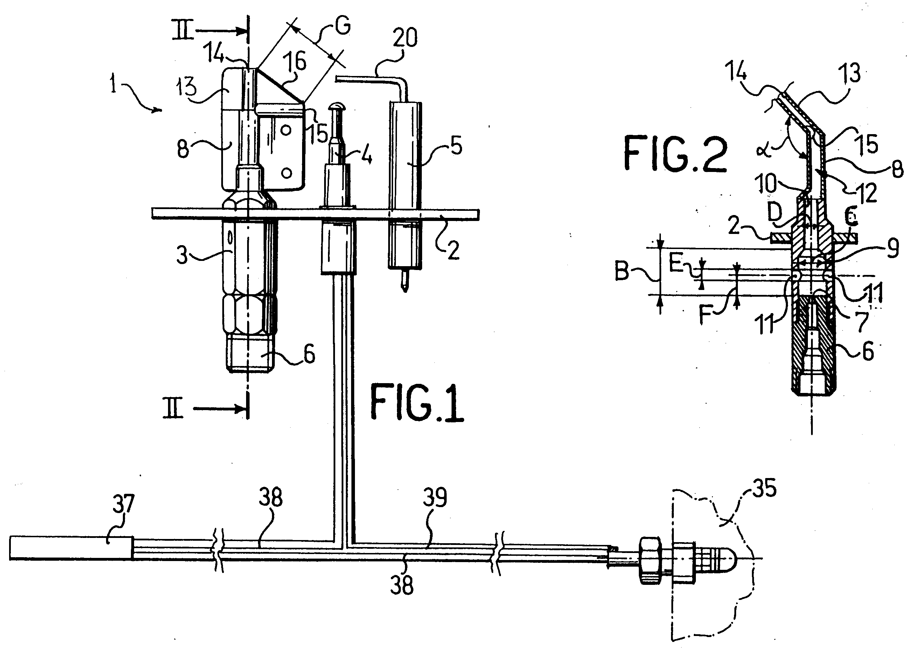

Figure 1 is a front elevation view of an atmospheric detector embodying this invention;
Figure 2 is a sectional view of that same detector, taken along the line II-II in Figure 1.

In the drawing views, generally indicated at 1 is a free flame atmospheric detector according to this invention.

The detector 1 comprises a holder 2 to which there are secured a blowpipe 3, a flame sensor 4 formed by the measuring junction of a double-wire thermocouple, and an igniter 5 for the detector 1.

The blowpipe 3 has a polygonal outside shape and is hollow inside. Threaded to an axial end thereof is a fuel gas supply nozzle 6 which has a delivery hole 7 with a cross-section (area) A.

A burner 8 is attached to the opposite axial end of the blowpipe 3.

Inside the blowpipe 3, there are defined an intake chamber 9 and a mixing conduit 10 which are coaxial with each other and with the delivery hole 7 of the nozzle 6. The intake chamber 9 is cylindrical in shape and has an axial length dimension B and inside diameter C; the reference character D denotes the inside cross-section (area) of the mixing conduit 10, also cylindrical in shape.

Two primary combustion air supply holes 11 open to the interior of the intake chamber 9; said holes 11 are located diametrically opposite from each other, are arranged with their axes at a predetermined distance F from the delivery hole of the nozzle 6, and have a combined cross-section E.

The burner 8 is formed by two superimposed plates coupled together and fashioned to define a tubular conduit 12 which extends in continuation of the mixing conduit 10 and an end portion 13, folded to an angle alpha of substantially 135±15°, whereat the tubular conduit 12 branches out into two flame spouts 14, 15. The flame spouts 14, 15 are set divergent substantially at right angles from each other and have open free ends at a predetermined distance G apart. A shallow flattened conduit 16 interconnects the two spouts 14, 15 to provide flame continuity therebetween. The spout 15 is substantially aligned to the fold line of the end portion 13. This setting, along with the fold in the spout 14, is specially critical to pass the Turn down Test. IN accordance with this invention, the ratio A/E of the cross-section (area) of the delivery hole 7 of the nozzle 6 to the combined cross-section (area) of the primary combustion air supply holes 11 lies between 0.0030 and 0.0120. Preferably, that ratio A/E should be within the range of 0.0050 and 0.0100, and an optimum value is A/E = 0.075.

Also, the ratio D/A of the inside cross-section of the mixing conduit 10 to the cross-section of the hole 7 of the nozzle 6 lies between 100 and 200. Preferably, that ratio D/A should lie between 115 and 160, an optimum value being D/A = 133.4.

The ratio B/F of the height of the intake chamber 9 to the distance between the nozzle 6 and the axis of the primary combustion air supply holes 11 lies between 1 and 2, preferred values being n the 1.2 to 1.8 range, and an optimum value being 1.51. The cross-section (area) of the delivery hole 7 of the nozzle 6 is less than or equal to 0.2 mm², with preferred values at less than 0.12 mm², and an optimum value at 0.085 mm². further, the distance G between the flame spouts 14, 15, or so-called flame espanse, lies preferably between 10 and 30 mm.

The detector 1 is ignited by striking an electric arc between an electrode 20 of the igniter 5 and the measuring junction 4 of the flame sensor upon a potential difference being established therebetween, e.g. by means of conventional piezoelectric devices.

The electric arc will ignite the air/fuel gas mixture exiting the flame spout 15, and the burning flame will propagate to the flame spout 14 through the conduit 16.

As long as the pressure of the fuel gas and the amount of oxygen in the ambient air keep within selected values for proper operation of the detector 1, the flame issuing from the flame spout 15 will be heating the measuring junction 4 of the flame sensor and enable the supply of fuel gas.

On the oxygen content dropping below a preset minimum constituting a danger threshold, the amount of oxygen supplied with the primary combustion air is no longer adequate to keep the flame consistently close to the spouts 14, 15. The oxygen shortage is compensated for by the secondary combustion air made available at the outlet of the burner 8, and accordingly, the flame will move away from said burner to thereby cool the flame sensor measuring junction 4 and, therefore, cut off the supply of fuel gas.

The peculiar design of this detector also enables it to pass the Turn down Test, since as the pressure of the fuel gas decreases to below a preset threshold value, the flame will diminish to nil at the spout 15, whereas the flame from the spout 14 remains active. Also in this case the flame sensor measuring junction 4 is cooled to cut off the fuel gas supply.

## Claims

1. A free-flame atmospheric detector comprising a blowpipe (3) in which an air-gas intake and mixing chamber (9) is defined, a gas supply nozzle (6) and at least one primary air supply hole (11) both opening into said intake chamber, a free flame burner (8), a mixing conduit (10) extending between said mixing chamber and said burner to supply an air-gas mixture formed in said chamber to said burner, and a flame sensor (4) so positioned as to be swept by the flame issuing from the burner (8) to thereby pilot the gas supply to said nozzle (6), said burner (8) comprising at least two flame spouts (14,15) diverging from each other, of which one is directed toward said flame sensor (4), characterized in that said flame spouts (14,15) are sealed against secondary combustion air along their whole length.

2. A detector according to Claim 1, characterized in that the ratio (A/E) of the cross-section of said nozzle (6) to the combined cross-section of the primary air supply holes (11) lies between 0.0030 and 0.0120.

3. A detector according to Claim 1, characterized in that the ratio (A/E) of the cross-section of said nozzle (6) to the combined cross-section of the primary air supply holes (11) lies between 0.0050 and 0.0100.

4. A detector according to Claim 1, characterized in that the ratio (A/E) of the cross-section of said nozzle (6) to the combined cross-section of the primary air supply holes (11) is substantially equal to 0.075.

5. A detector according to Claim 1, characterized in that the ratio (D/A) Of the inside cross-section of said mixing conduit (10) to the cross-section of the said nozzle (6) lies between 100 and 200.

6. A detector according to Claim 1, characterized in that the ratio (D/A) of the inside cross-section of said mixing conduit (10) to the cross-section of said nozzle (6) lies between 115 and 160.

7. A detector according to Claim 1, characterized in that the ratio (D/A) of the inside cross-section of said mixing conduit (10) to the cross-section of said nozzle (6) is substantially equal to 133.4.

8. A detector according to Claim 1, characterized in that the ratio (B/F) of the height of said mixing chamber (9) to the distance between said nozzle (6) and the axis of the primary air supply holes (11) is in the 1 to 2 range.

9. A detector according to Claim 1, characterized in that the ratio (B/F) of the height of said mixing chamber (9) to the distance between said nozzle (6) and the axis of the primary air supply holes (11) is in the 1.2 to 1.8 range.

10. A detector according to Claim 1, characterized in that the ratio (B/F) of the height of said mixing chamber (9) to the distance between said nozzle (6) and the axis of the primary air supply holes (11) is substantially equal to 1.51.

11. A detector according to Claim 1, characterized in that the cross-section of the supply hole (7) of said nozzle (6) is less than or equal to 0.2 mm².

12. A detector according to Claim 1, characterized in that the cross-section of the supply hole (7) of said nozzle (6) is less than or equal to 0.12 mm².

13. A detector according to Claim 1, characterized in that the cross-section of the supply hole (7) of said nozzle (6) is substantially equal to 0.085 mm².

14. A detector according to Claim 1, characterized in that the distance (G) between the flame spouts (14,15), as measured at the outlets thereof, lies between 10 and 30 mm.

15. A detector according to one or more of the preceding claims, characterized in that said burner has a portion (13) whereat said flame spouts (14,15) are defined, said portion (13) being folded over to an obtuse angle from said mixing conduit (10).

16. A detector according to Claim 15, characterized in that said obtuse angle is substantially equal to 135±15°.

17. A detector according to one or more of the preceding claims, characterized in that said flame spouts are set substantially at right angles from each other.

## Patentansprüche

1. Atmosphärischer Freiflammendetektor mit einem Blasrohr (3), in dem eine Luft/Gaseinlaß- und Mischkammer (9) gebildet ist, einer Gaszuführdüse (6) und wenigstens einem Primärverbrennungsluft-Zuführloch (11), die sich beide in die Einlaßkammer (9) hinein öffnen, einem Freiflammenbrenner (8), einer Mischungsleitung (10), die sich zwischen der Mischungskammer und dem Brenner erstreckt, um das in der Kammer gebildete Luft-Gasgemisch dem Brenner zuzuführen und einem Flammen-Sensor (4), der so angeordnet ist, daß er von der Flamme überstrichen wird, die aus dem Brenner (8) austritt, um auf diese Weise die Gaszufuhr zur Düse (6) zu steuern, wobei der Brenner (8) wenigstens zwei Flammenstrahlrohre (14, 15) aufweist, deren Richtung voneinander abweicht und von denen eines auf den Flammensensor (4) zu gerichtet ist,
dadurch **gekennzeichnet,** daß die Flammenstrahlrohre (14, 15) längs ihrer gesamten Länge gegen Sekundär-Verbrennungsluft abgedichtet sind.

2. Detektor nach Anspruch 1, dadurch gekennzeichnet, daß das Verhältnis A/E des Querschnittes der Düse (6) zum zusammengefaßten Querschnitt der Zuführlöcher (11) für die Primärluft zwischen 0,003 und 0,012 liegt.

3. Detektor nach Anspruch 1, dadurch gekennzeichnet, daß das Verhältnis A/E des Querschnittes der Düse (6) zum zusammengefaßten Querschnitt der Zuführlöcher (11) für die Primärluft zwischen 0,005 und 0,01 liegt.

4. Detektor nach Anspruch 1, dadurch gekennzeichnet, daß das Verhältnis A/E des Querschnittes der Düse (6) zum zusammengefaßten Querschnitt der Zuführlöcher (11) für die Primärluft im wesentlichen gleich 0,075 ist.

5. Detektor nach Anspruch 1, dadurch gekennzeichnet, daß das Verhältnis D/A des Innenquerschnittes der Mischungsleitung (10) zum Querschnitt der Düse (6) zwischen 100 und 200 liegt.

6. Detektor nach Anspruch 1, dadurch gekennzeichnet, daß das Verhältnis D/A des Innenquerschnitts der Mischungsleitung (10) zum Querschnitt der Düse (6) zwischen 115 und 160 liegt.

7. Detektor nach Anspruch 1, dadurch gekennzeichnet, daß das Verhältnis D/A des Innenquerschnitts der Mischungsleitung (10) zum Querschnitt der Düse (6) im wesentlichen gleich 133,4 ist.

8. Detektor nach Anspruch 1, dadurch gekennzeichnet, daß das Verhältnis B/F der Höhe der Einlaß- und Mischungskammer (9) zum Abstand zwischen der Düse (6) und der Mittellinie der Zuführlöcher (11) für die Primärluft im Bereich zwischen 1 und 2 liegt.

9. Detektor nach Anspruch 1, dadurch gekennzeichnet, daß das Verhältnis B/F der Höhe der Einlaß- und Mischkammer (9) zum Abstand zwischen der Düse (6) und der Mittellinie der Zuführlöcher (11) für die Primärluft im Bereich zwischen 1,2 und 1,8 liegt.

10. Detektor nach Anspruch 1, dadurch gekennzeichnet, daß das Verhältnis B/F der Höhe der Einlaß- und Mischkammer (9) zum Abstand zwischen der Düse (6) und der Mittellinie der Zuführlöcher (11) für die Primärluft im wesentlichen bei 1,51 liegt.

11. Detektor nach Anspruch 1, dadurch gekennzeichnet, daß der Querschnitt des Anlieferungsloches (7) der Düse (6) geringer oder gleich 0,2 mm² ist.

12. Detektor nach Anspruch 1, dadurch gekennzeichnet, daß der Querschnitt des Anlieferungsloches (7) der Düse (6) weniger oder gleich 0,12 mm² ist.

13. Detektor nach Anspruch 1, dadurch gekennzeichnet, daß der Querschnitt des Anlieferungsloches (7) der Düse (6) im wesentlichen gleich 0,085 mm² ist.

14. Detektor nach Anspruch 1, dadurch gekennzeichnet, daß der Abstand G zwischen den Flammenstrahlrohren (14, 15), gemessen an ihren Auslässen, zwischen 10 und 30 mm liegt.

15. Detektor nach einem oder mehreren der vorangegangenen Ansprüche, dadurch gekennzeichnet, daß der Brenner einen Abschnitt (13) hat, an dem die Flammenstrahlrohre (14, 15) ausgebildet sind, wobei der Abschnitt (13) um einen stumpfen Winkel gegenüber der Mischungsleitung (10) abgewinkelt ist.

16. Detektor nach Anspruch 15, dadurch gekennzeichnet, daß der stumpfe Winkel im wesentlichen 135° ± 15° ist.

17. Detektor nach einem oder mehreren der vorangegangenen Ansprüche, dadurch gekennzeichnet, daß die Flammenstrahlrohre im wesentlichen in einem rechten Winkel zueinander stehen.

## Revendications

1. Détecteur atmosphérique à flamme libre, comprenant un tube de soufflage (3) dans lequel est délimitée une chambre (9) d'admission et de mélange d'air et de gaz, une buse (6) de distribution de gaz et au moins un trou (11) de distribution d'air primaire débouchant tous deux dans la chambre d'admission, un brûleur (8) à flamme libre, un conduit (10) de mélange placé entre la chambre de mélange et le brûleur et destiné à transmettre un mélange air-gaz formé dans la chambre au brûleur, et un capteur (4) de flamme disposé afin qu'il soit balayé par la flamme provenant du brûleur (8) et pilote ainsi la distribution de gaz à la buse (6), le brûleur (8) comprenant au moins deux becs (14, 15) de flamme divergeant l'un de l'autre et dont l'un est dirigé vers le capteur (4) de flamme, caractérisé en ce que les becs (14, 15) de flamme sont fermés sur toute leur longueur de manière qu'ils ne reçoivent pas d'air secondaire de combustion.

2. Détecteur selon la revendication 1, caractérisé en ce que le rapport (A/E) de la section de la buse (6) à la section combinée des trous (11) de distribution d'air primaire est compris entre 0,0030 et 0,0120.

3. Détecteur selon la revendication 1, caractérisé en ce que le rapport (A/E) de la section de la buse (6) à la section combinée des trous (11) de distribution d'air primaire est compris entre 0,0050 et 0,0100.

4. Détecteur selon la revendication 1, caractérisé en ce que le rapport (A/E) de la section de la buse (6) à la section combinée des trous (11) de distribution d'air primaire est pratiquement égal à 0,075.

5. Détecteur selon la revendication 1, caractérisé en ce que le rapport (D/A) de la section interne du conduit de mélange (10) à la section de la buse (6) est compris entre 100 et 200.

6. Détecteur selon la revendication 1, caractérisé en ce que le rapport (D/A) de la section interne du conduit de mélange (10) à la section de la buse (6) est compris entre 115 et 160.

7. Détecteur selon la revendication 1, caractérisé en ce que le rapport (D/A) de la section interne du conduit de mélange (10) à la section de la buse (6) est pratiquement égal à 133,4.

8. Détecteur selon la revendication 1, caractérisé en ce que le rapport (B/F) de la hauteur de la chambre de mélange (9) à la distance comprise entre la buse (6) et l'axe des trous (11) de distribution d'air primaire est compris dans la plage allant de 1 à 2.

9. Détecteur selon la revendication 7, caractérisé en ce que le rapport (B/F) de la hauteur de la chambre de mélange (9) à la distance comprise entre la buse (6) et l'axe des trous (11) de distribution d'air primaire est compris dans la plage allant de 1,2 à 1,8.

10. Détecteur selon la revendication 1, caractérisé en ce que le rapport (B/F) de la hauteur de la chambre de mélange (9) à la distance comprise entre la buse (6) et l'axe des trous (11) de distribution d'air primaire est pratiquement égal à 1,51.

11. Détecteur selon la revendication 1, caractérisé en ce que la section du trou (7) de distribution de la buse (6) est inférieure ou égale à 0,2 mm².

12. Détecteur selon la revendication 1, caractérisé en ce que la section du trou (7) de distribution de la buse (6) est inférieure ou égale à 0,12 mm².

13. Détecteur selon la revendication 1, caractérisé en ce que la section du trou (7) de distribution de la buse (6) est pratiquement égale à 0,085 mm².

14. Détecteur selon la revendication 1, caractérisé en ce que la distance (G) comprise entre les becs (14, 15) de flamme mesurée à leur sortie, est comprise entre 10 et 30 mm.

15. Détecteur selon une ou plusieurs des revendications précédentes, caractérisé en ce que le brûleur a une partie (13) dans laquelle sont délimités les becs (14, 15) de flamme, cette partie (13) étant coudée afin qu'elle forme un angle obtus avec le conduit de mélange (10).

16. Détecteur selon la revendication 15, caractérisé en ce que l'angle obtus est pratiquement égal à 135 ± 15°.

17. Détecteur selon l'une ou plusieurs des revendications précédentes, caractérisé en ce que les becs de flamme sont réglés afin qu'ils soient perpendiculaires l'un à l'autre.
